(19) Europäisches Patentamt
European Patent Office
Office européen des brevets

(11) **EP 3 512 242 B1**

(12) **EUROPEAN PATENT SPECIFICATION**

(45) Date of publication and mention
of the grant of the patent:
**02.06.2021 Bulletin 2021/22**

(21) Application number: **16917385.3**

(22) Date of filing: **30.09.2016**

(51) Int Cl.:
***H04W 52/24*** *(2009.01)*     ***H04W 52/38*** *(2009.01)*
***H04W 72/02*** *(2009.01)*     ***H04W 72/08*** *(2009.01)*

(86) International application number:
**PCT/CN2016/101316**

(87) International publication number:
**WO 2018/058635 (05.04.2018 Gazette 2018/14)**

(54) **METHOD AND DEVICE FOR CONTROLLING SIGNAL TRANSMISSION**

VERFAHREN UND VORRICHTUNG ZUR STEUERUNG EINER SIGNALÜBERTRAGUNG

PROCÉDÉ ET DISPOSITIF DE COMMANDE DE TRANSMISSION DE SIGNAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.07.2019 Bulletin 2019/29**

(73) Proprietor: **Huawei Technologies Co., Ltd.
Longgang District
Shenzhen, Guangdong 518129 (CN)**

(72) Inventors:
• **ZENG, Yongbo
  Shenzhen
  Guangdong 518129 (CN)**
• **CAI, Yu
  Shenzhen
  Guangdong 518129 (CN)**
• **WANG, Jian
  Shenzhen
  Guangdong 518129 (CN)**

(74) Representative: **Pfenning, Meinig & Partner mbB
Patent- und Rechtsanwälte
Joachimsthaler Straße 10-12
10719 Berlin (DE)**

(56) References cited:
WO-A1-2014/113424     CN-A- 104 105 185
CN-A- 104 244 392     CN-A- 105 101 250
CN-A- 105 323 841     CN-A- 105 578 532
US-A- 5 828 660       US-A1- 2015 016 410

EP 3 512 242 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD

The present invention relates to the field of wireless communications technologies, and more specifically, to a signal transmission control method and apparatus.

## BACKGROUND

Currently, a device-to-device (English: Device-to-Device, D2D for short) communications technology may be used for wireless communication between terminals. In some scenarios of the D2D communications technology, a terminal can wirelessly communicate with a base station, and different terminals can wirelessly communicate with each other. Therefore, a plurality of terminals sometimes transmit signals to a same receive-end device. The terminals that transmit the signals to the same receive-end device may be classified into different types. The different types of terminals have different requirements and usually transmit the signals by using different power. Therefore, the same receive-end device usually receives signals with different power. In other words, the same receive-end device usually can receive both a signal with high power and a signal with low power. For achieving bandwidth efficiency, US5828660A proposes a multiple user digital communication system that facilitates multiple user reverse link communication using overlapped transmit signal spectra of at least two overlap bandwidth subscriber units.

The inventors find through research that different types of terminals often transmit signals by sharing a same resource pool. In this case, the different types of terminals may transmit the signals to a same receive-end device by using resources in a same time interval that are close in frequency. Accordingly, the same receive-end device receives, on the resources in the same time interval that are close in frequency, different signals with a relatively large power difference. Consequently, a signal with relatively high power causes severe in-band emission interference to a signal with relatively low power, and the receive-end device is likely to lose the signal with the relatively low power.

## SUMMARY

To resolve a technical problem, this application provides, as a present invention, a signal transmission control method and apparatus according to the independent claims, to avoid that different types of terminals transmit different signals with a relatively large power difference by using resources in a same time interval that are close in frequency domain. As a result, a same receive-end device does not receive the different signals with the relatively large power difference on the resources in the same time interval that are close in frequency domain, thereby avoiding in-band emission interference and avoiding signal loss of the receive-end device.

Further embodiments are set out in the dependent claims.

## BRIEF DESCRIPTION OF DRAWINGS

To describe technical solutions in embodiments of the present invention or in the prior art more clearly, the following briefly describes accompanying drawings required for describing the embodiments or the prior art. Apparently, the accompanying drawings in the following description show merely some embodiments of the present invention or a related invention, and a person of ordinary skill in the art may derive other drawings of subject-matter within the scope of the appended claims from these accompanying drawings without creative efforts.

FIG. 1 is a schematic diagram of in-band emission interference;
FIG. 2 is a schematic framework diagram of a network system in an application scenario according to an embodiment of the present invention;
FIG 3 is a schematic flowchart of a signal transmission control method according to an embodiment of a related invention;
FIG. 4 is a schematic flowchart of a signal transmission control method according to an embodiment of a related invention;
FIG. 5 is a schematic flowchart of a signal transmission control method according to an embodiment of a related invention;
FIG. 6 is a schematic diagram of an example of a manner for indicating a reserved resource location according to an embodiment of a related invention;
FIG. 7 is a schematic diagram of an example of an unavailable resource range according to an embodiment of a related invention;
FIG. 8 is a schematic flowchart of a signal transmission control method according to an embodiment of a related invention;
FIG. 9 is a schematic flowchart of a signal transmission control method according to an embodiment of a related invention;
FIG. 10 is a schematic diagram of an example of a guard band forming mechanism according to an embodiment of a related invention;
FIG 11 is a schematic diagram of an example of transmitting a target signal according to an embodiment of a related invention;
FIG 12 is a schematic diagram of an example of transmitting a target signal according to an embodiment of a related invention;
FIG. 13 is a schematic diagram of an example of transmitting a target signal according to an embodiment of a related invention;
FIG. 14 is a schematic structural diagram of a signal transmission control apparatus according to an embodiment of the present invention;

FIG 15 is a schematic structural diagram of a signal transmission control apparatus according to an embodiment of a related invention;

FIG 16 is a schematic structural diagram of a signal transmission control apparatus according to an embodiment of a related invention;

FIG. 17 is a schematic structural diagram of a signal transmission control apparatus according to an embodiment of a related invention;

FIG. 18 is a schematic structural diagram of a signal transmission control apparatus according to an embodiment of a related invention;

FIG. 19 is a schematic diagram of a hardware structure of a terminal according to an embodiment of a related invention;

FIG 20 is a schematic diagram of a hardware structure of a network side device according to an embodiment of a related invention;

FIG 21 is a schematic diagram of a hardware structure of a terminal according to an embodiment of a related invention;

FIG. 22 is a schematic diagram of a hardware structure of a terminal according to an embodiment of a related invention; and

FIG. 23 is a schematic diagram of a hardware structure of a terminal according to an embodiment of a related invention.

## DESCRIPTION OF EMBODIMENTS

The inventors find through research that in a scenario of a D2D communications technology, in many cases, different types of terminals transmit signals by sharing a same resource pool. Accordingly, the different types of terminals may transmit the signals to a same receive-end device by using resources in a same time interval that are close in frequency. However, the different types of user terminals usually transmit the signals by using different power. Consequently, the same receive-end device receives different signals with a relatively large power difference on the resources in the same time interval that are close in frequency, a signal with relatively high power causes severe in-band emission interference to a signal with relatively low power, and the receive-end device is likely to lose the signal with the relatively low power.

For example, in an Internet of Vehicles scenario, vehicle user equipment (English: Vehicle User Equipment, V-UE for short) may communicate with pedestrian user equipment (English: Pedestrian User Equipment, P-UE for short) through a sidelink (English: sidelink) interface. Upon comparison, large differences exist between the P-UE and the V-UE in aspects such as moving speeds, safety distance requirements, and power consumption requirements. Therefore, there is usually a relatively large difference between signal transmit power used by the P-UE and the V-UE. However, to enhance a mechanism used for the sidelink interface, the P-UE and the V-UE may transmit signals by sharing a same resource pool. In this case, the P-UE and the V-UE may select resources in a same time interval for signal transmission through frequency division multiplexing. Therefore, a same receive-end device may receive, in the same time interval, a signal transmitted by the P-UE and a signal transmitted by the V-UE. In a frequency division multiple access modulation scheme, due to a non-ideal factor of a terminal filter, power of signals carried on different subcarriers or physical resource blocks (English: Physical Resource Block, PRB for short) in a same time interval leaks onto another subcarrier or IBE close in frequency domain, causing in-band emission (English: In-band emission, IBE for short) interference to a signal carried on the another subcarrier or PRB. Therefore, due to the relatively large difference between the signal transmit power of the P-UE and the V-UE, if the P-UE and the V-UE transmit signals at resource locations in a same time interval that are close in frequency domain, from a perspective of the receive-end device, a signal with relatively high power may cause severe in-band emission interference to a signal with relatively low power, and the receive-end device is likely to lose the signal with the relatively low power.

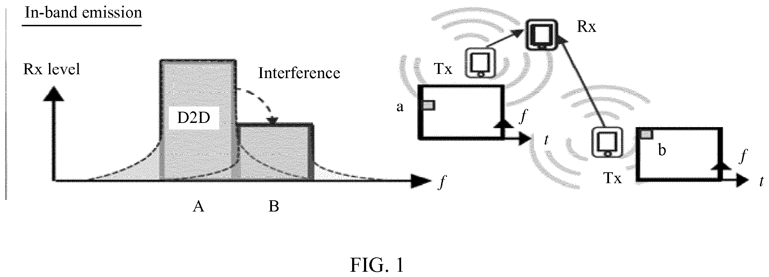

FIG. 1 is a schematic diagram of in-band emission interference. Tx represents a terminal that transmits a signal, Rx represents a receive-end device, and a and b represent two resource locations used by two terminals Tx to transmit signals. It can be seen that the two resource locations are located in a same time interval and close in frequency domain. A and B represent power at which Rx receives the two signals transmitted by the two terminals Tx. It can be seen that both A and B cause in-band emission to another resource location close in frequency domain. For example, A causes in-band emission to a resource location of B, and interferes with B. From a perspective of a receive end, a signal with high receive power causes stronger in-band emission interference.

Based on this, the embodiments of the present invention provide a plurality of manners to avoid receive-end signal loss caused by the in-band emission interference.

In one aspect of the embodiments of the present invention, when a first-type terminal and a second-type terminal share a resource pool, the first-type terminal increases signal transmit power and/or the second-type terminal decreases signal transmit power, so that even though different types of terminals transmit different signals by using resources in a same time interval that are close in frequency domain, a difference between transmit power of these signals is not large. In this way, in-band emission interference is reduced and a receive-end device does not lose a signal.

In another aspect of the embodiments of a related invention, when selecting a resource location for signal transmission, a terminal may exclude a resource location that is close in frequency domain to and located in a same time interval as a resource location reserved by another terminal of a different type. Therefore, signals transmitted by different types do not exist at resource locations in a same time interval that are close in frequency domain. In this way, in-band emission interference is reduced and a receive-end device does not lose a signal.

In still another aspect of the embodiments of a related invention, resource locations used by different types of terminals to transmit signals are separated by a resource location occupied by a guard band, and each type of terminal cannot use a resource location that is available for another type of terminal to transmit a signal. Therefore, signals transmitted by different types do not exist at resource locations in a same time interval that are close in frequency domain, or even though different signals with a relatively large power difference that are transmitted by different types of terminals exist at resource locations in a same time interval that are close in frequency domain, content of a signal suffering in-band emission interference is not severely affected. In this way, in-band emission interference is reduced and a receive-end device does not lose a signal.

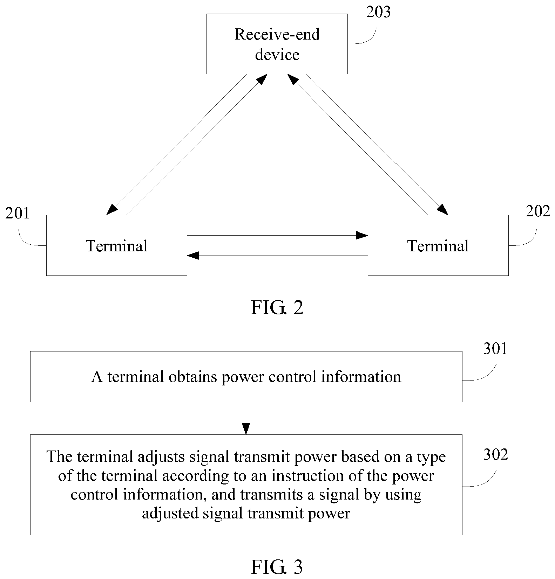

For example, one of scenarios of the embodiments of the present invention may be an application to a network system shown in FIG. 2. The network system includes a terminal 201, a terminal 202, and a receive-end device 203. The terminal 201 is a first-type terminal, and the terminal 202 is a second-type terminal. The receive-end device 203 can receive both signals transmitted by the terminal 201 and the terminal 202. The terminal 201 and the terminal 202 can receive a signal transmitted by each other.

Based on the network system shown in FIG. 2, for example, the terminal 201 obtains power control information, adjusts signal transmit power based on a type of the terminal 201 according to an instruction of the power control information, and transmits a signal by using adjusted signal transmit power. For another example, the terminal 202 obtains power control information, adjusts signal transmit power based on a type of the terminal 202 according to an instruction of the power control information, and transmits a signal by using adjusted signal transmit power. In the two examples, the power control information is configured as first instruction information and/or second instruction information when a first condition is met. The first instruction information is used to instruct the first-type terminal to increase signal transmit power. The second instruction information is used to instruct the second-type terminal to decrease signal transmit power. The first condition is that the first-type terminal and the second-type terminal share a resource pool.

Based on the network system shown in FIG. 2, for example, the terminal 201 receives a signal transmitted by the terminal 202 and obtains, from the signal transmitted by the terminal 202, a resource location reserved by the terminal 202 for signal transmission, and the first terminal 201 determines an unavailable resource range and transmits a signal at a resource location beyond the unavailable resource range. The unavailable resource range is located in a time interval in which the resource location reserved by the terminal 201 for signal transmission is located. For another example, the terminal 202 receives a signal transmitted by the terminal 201 and obtains, from the signal transmitted by the terminal 201, a resource location reserved by the terminal 201 for signal transmission, and the first terminal 202 determines an unavailable resource range and transmits a signal at a resource location beyond the unavailable resource range. The unavailable resource range is located in a time interval in which the resource location reserved by the terminal 202 for signal transmission is located.

Based on the network system shown in FIG. 2, for example, the terminal 201 receives a signal transmitted by the terminal 202, obtains, from the signal transmitted by the terminal 201, a resource location reserved by the terminal 202 for signal transmission, and measures signal receive power. The first terminal 201 adjusts signal transmit power based on a type of the terminal 201 according to a power control policy, and transmits a signal by using adjusted signal transmit power at a resource location reserved by the terminal 201 for signal transmission. For another example, the terminal 202 receives a signal transmitted by the terminal 201, obtains, from the signal transmitted by the terminal 202, a resource location reserved by the terminal 201 for signal transmission, and measures signal receive power. The first terminal 202 adjusts signal transmit power based on a type of the terminal 202 according to a power control policy, and transmits a signal by using adjusted signal transmit power at a resource location reserved by the terminal 202 for signal transmission. In the two examples, the power control policy is used to instruct the first-type terminal to increase signal transmit power when both a first condition and a second condition are met, or used to instruct the second-type terminal to decrease signal transmit power when both the first condition and the second condition are met. The first condition is that the resource location reserved by the second terminal for signal transmission and the resource location reserved by the first terminal for signal transmission are located in a same time interval. The second condition is that the signal receive power is greater than a power threshold.

Based on the network system shown in FIG. 2, for example, the terminal 201 determines an available resource location and transmits a target signal at the available resource location. The available resource location includes a first-type resource location and does not include a second-type resource location. For another example, the terminal 202 determines an available resource location and transmits a target signal at the available resource location. The available resource location includes a second-type resource location and does not include a first-type resource location. In the two examples, the first-type resource location may be used by a first-type terminal to transmit a signal, the second-type resource location may be used by a second-type terminal to transmit a signal, and the first-type resource location and the second-type resource location are separated in frequency domain by a resource location occupied by a guard band.

It may be understood that the foregoing scenario is merely a scenario example provided in the embodiments of the present invention, and the embodiments of the present invention are not limited to the scenario.

It should be noted that in the embodiments of the present invention, the mentioned term "time interval" may be, for example, a subframe, and the mentioned term "network side device" may be, for example, a base station, such as an evolved NodeB (English: Evolved NodeB, eNB for short).

A type of a terminal may be obtained through classification based on an actual type (UE type) of the terminal, a service type (service type) of the terminal, a type (message type) of a message sent by the terminal, and/or a priority (priority) of the message sent by the terminal. The type of the terminal may be indicated by using a cyclic shift value of a sequence used for a demodulation reference signal (Demodulation Reference Signal, DMRS) in a signal sent by the terminal. The DMRS may be a DMRS for an SCI signal transmitted on a PSCCH (Physical Sidelink Control Channel, physical sidelink control channel) and/or a DMRS for a data signal transmitted on a PSSCH (Physical Sidelink Shared Channel, physical sidelink shared channel).

A signal transmission control method and a related device in embodiments of a related invention are described below in detail with reference to accompanying drawings by using embodiments.

FIG. 3 is a schematic flowchart of a signal transmission control method according to an embodiment of a related invention. This embodiment is described from a perspective of a terminal, and a manner for controlling signal transmit power of the terminal is determined based on a type of the terminal. Specifically, in this embodiment, the method may include, for example, the following steps:

301. The terminal obtains power control information.
302. The terminal adjusts the signal transmit power based on the type of the terminal according to an instruction of the power control information, and transmits a signal by using adjusted signal transmit power.

The type of the terminal is a first type or a second type.

The power control information is configured as first instruction information and/or second instruction information when a first condition is met, the first instruction information is used to instruct a first-type terminal to increase signal transmit power, the second instruction information is used to instruct a second-type terminal to decrease signal transmit power, and the first condition is that the first-type terminal and the second-type terminal share a resource pool.

In this embodiment, different types of power control information may be used to instruct the terminal to control the signal transmit power in different manners. The power control information indicates a control manner based on a type of a terminal. Therefore, when adjusting the signal transmit power according to an instruction of the power control information, the terminal further needs to refer to the type of the terminal. Specifically, for the power control information obtained by the terminal, the terminal first needs to determine whether the type of the terminal is a terminal type in the power control information. If the type of the terminal is the terminal type in the power control information, the terminal adjusts the signal transmit power in a control manner that is indicated in the power control information for the type of the terminal. If the type of the terminal is not the terminal type in the power control information, the terminal may reject adjusting the signal transmit power in a control manner indicated in the power control information.

For example, when the power control information is the first instruction information, the power control information is used to instruct the first-type terminal to increase the signal transmit power. If the terminal obtaining the power control information is the first-type terminal, the terminal may increase the signal transmit power according to an instruction of the power control information. If the terminal obtaining the power control information is the second-type terminal, the terminal may reject increasing the signal transmit power according to an instruction of the power control information, and keep the signal transmit power unchanged.

For another example, when the power control information is the second instruction information, the power control information is used to instruct the second-type terminal to decrease the signal transmit power. If the terminal obtaining the power control information is the first-type terminal, the terminal may reject decreasing the signal transmit power according to an instruction of the power control information, and keep the signal transmit power unchanged. If the terminal obtaining the power control information is the second-type terminal, the terminal may decrease the signal transmit power according to an instruction of the power control information.

For still another example, when the power control information includes the first instruction information and the second instruction information, the power control information is used to instruct the first-type terminal to increase the signal transmit power and used to instruct the second-type terminal to decrease the signal transmit power. If the terminal obtaining the power control information is the first-type terminal, the terminal may only increase the signal transmit power according to an instruction of the first instruction information in the power control information. If the terminal obtaining the power control information is the second-type terminal, the terminal may only decrease the signal transmit power according to an instruction of the second instruction information in the power control information.

It may be understood that the power control information may be determined based on configuration information. When the configuration information meets different conditions, the power control information may be configured as different types of instruction information, to control the signal transmit power of the terminal in different manners. Instruction information that can be used to configure the power control information may include the first instruction information, the second instruction information, and/or third instruction information. The first instruction information is used to instruct the first-type terminal to increase the signal transmit power. The second instruction information is used to instruct the second-type terminal to decrease the signal transmit power. The third instruction information is used to instruct a terminal to keep signal transmit power unchanged.

For example, by using the first condition, the power control information may be configured as information used to instruct a terminal whether to control power. The first condition is that the first-type terminal and the second-type terminal share a resource pool. Specifically, when the configuration information meets the first condition, the power control information may be configured as enabling information used to instruct a terminal to control power. In other words, the power control information may be configured as the first instruction information and/or the second instruction information. When the configuration information does not meet the first condition, the power control information may be configured as disabling information used to instruct a terminal to reject power control. In other words, the power control information may be configured as the third instruction information.

For another example, by using the first condition and a second condition, the power control information may be configured as information used to instruct a terminal whether to control power. The second condition is that the first-type terminal and the second-type terminal transmit signals in a same time interval through frequency resource multiplexing. Specifically, when the configuration information meets both the first condition and the second condition, the power control information may be configured as enabling information used to instruct a terminal to control power. In other words, the power control information may be configured as the first instruction information and/or the second instruction information. When the configuration information does not meet the first condition or the second condition, the power control information may be configured as disabling information used to instruct a terminal to reject power control. In other words, the power control information may be configured as the third instruction information.

It may be understood that the first condition and the second condition are used to enable power control mainly due to the following reasons: The first-type terminal and the second-type terminal may transmit signals in a same time interval only when the first-type terminal and the second-type terminal share a resource pool. In-band emission interference may occur only when the first-type terminal and the second-type terminal transmit signals in a same time interval. When the first-type terminal and the second-type terminal do not share a resource pool, neither the first-type terminal and the second-type terminal transmit signals in a same time interval in a same resource pool, nor in-band emission interference occurs.

For still another example, by using a third condition, the power control information may be configured as information used to indicate a power control manner. The third condition is that a density of second-type terminals is greater than a first density threshold or a quantity of second-type terminals is greater than a first quantity threshold. Specifically, when the configuration information meets both the first condition and the third condition, the power control information may be configured as the first instruction information. When the configuration information does not meet the third condition, the power control information may not be configured as the first instruction information.

For still another example, by using a fourth condition, the power control information may be configured as information used to indicate a power control manner. The fourth condition is that a density of first-type terminals is less than a second density threshold or a quantity of second-type terminals is less than a second quantity threshold. Specifically, when the configuration information meets both the first condition and the fourth condition, the power control information may be configured as the second instruction information. When the configuration information does not meet the fourth condition, the power control information may not be configured as the second instruction information.

The first density threshold, the second density threshold, the first quantity threshold, and the second quantity threshold may be preset thresholds. The first density threshold may be greater than the second density threshold, or the first density threshold may be equal to the second density threshold. The first quantity threshold may be greater than the second quantity threshold, or the first quantity threshold may be equal to the second quantity threshold.

It may be understood that the third condition and the fourth condition are used to determine the power control manner indicated by the power control information mainly due to the following reasons: If there are a relatively large quantity of first-type terminals, the second-type terminal slows down, and the second-type terminal has a lower requirement for relatively high signal transmit power. Therefore, in this case, the signal transmit power of the second-type terminal may be decreased. If there are a relatively large quantity of second-type terminals, the second-type terminal still requires relatively high signal transmit power. Therefore, in this case, the signal transmit power of the first-type terminal may be increased.

It should be noted that in addition to the foregoing examples, the four conditions may be used in another combination manner. For example, when the configuration information meets all the first condition, the second condition, and the third condition, the power control information may be configured as the first instruction information; when the configuration information meets all the first condition, the second condition, and the fourth condition, the power control information may be configured as the second instruction information; when the configuration information does not meet the first condition or the second condition, the power control information may be configured as the third instruction information; when the configuration information does not meet the third condition or the fourth condition, the power control information may be configured as the third instruction information.

In some implementations, the first instruction information, the second instruction information, and the third instruction information may be defined as different values of the power control information. For example, the power control information may be two-bit data, 00 represents the third instruction information, 01 represents the first instruction information, and 10 represents the second instruction information. If the power control information is configured as the first instruction information, a value of the power control information is 01. If the power control information is configured as the second instruction information, a value of the power control information is 10. If the power control information is configured as the third instruction information, a value of the power control information is 00.

Further, a signal transmit power adjustment manner in step 302 may be, for example, determined based on a value of the power control information and a transmit power adjustment factor as well as reference transmit power of the terminal before adjustment. Specifically, the signal transmit power adjustment manner in step 302 may be implemented by using the following formula:

$$P_t = P_0 + \beta \times A.$$

$P_0$ represents the reference transmit power. $P_t$ represents the adjusted signal transmit power. A represents the value corresponding to the power control information, and may be 1 or 0. For example, if the power control information is a value (for example, 01) defined for the first instruction information or a value (for example, 10) defined for the second instruction information, A = 1. If the power control information is a value (for example, 00) defined for the third instruction information, A = 0. $\beta$ represents the transmit power adjustment factor, and may be specifically determined by using the power control information. If the power control information is the first instruction information, $\beta$ is greater than 0. If the power control information is the second instruction information, $\beta$ is less than 0. If the power control information is the third instruction information, $\beta$ is 0. An absolute value of $\beta$ may be a fixed value, for example, 3 dB.

In this embodiment, a device configured to provide the power control information for the terminal may be the terminal, or may be a network side device.

For example, the power control information may be configured by the network side device and delivered to the terminal. The network side device may be a base station device such as an eNB. The network side device may deliver the power control information to the terminal by broadcasting a system information block (English: System Information Block, SIB for short). The power control information may be carried in a SIB message.

For another example, the power control information may be configured by the terminal based on preset information. The preset information may information preconfigured on the terminal. The terminal may configure the power control information by using the preset information according to a specification in a protocol.

The configuration information used to configure the power control information may be specifically a resource configuration. The resource configuration may include, for example, information about a quantity of resource pools, information about a time-frequency resource location occupied by a resource pool, information about a function of each resource pool when a plurality of resource pools are configured, and information indicating whether the first-type terminal and the second-type terminal share a same resource pool. Further, the resource configuration may include a resource pool configuration and resource multiplexing information. The information such as a quantity of resource pools, a time-frequency resource location occupied by a resource pool, and a function of each resource pool when a plurality of resource pools are configured may be included in the resource pool configuration, and the information indicating whether the first-type terminal and the second-type terminal share a same resource pool may be included in the resource multiplexing information. In addition, an affiliation between the resource pool configuration and the resource multiplexing information may be that the resource pool configuration includes the resource multiplexing information, or may be that the resource multiplexing information includes resource pool information.

It may be understood that this embodiment may be applied to a plurality of different scenarios, and the first-type terminal and the second-type terminal may be determined based on a scenario. For example, in a scenario of an Internet of Vehicles technology, the first-type terminal may be P-UE, and the second-type terminal may be V-UE. A signal coverage area of the P-UE is usually smaller than a signal coverage area of the V-UE, and the V-UE usually does not need to consider power consumption because no power supply problem exists, while the P-UE needs to consider power due to a power supply problem. Therefore, the P-UE may use relatively low signal transmit power, and the V-UE may use relatively high signal transmit power. In some cases, the signal transmit power used by the P-UE is lower than the signal transmit power used by the V-UE.

Optionally, the type of the terminal may be specifically obtained through classification based on any one or more types of information: an actual type of the terminal, a service type of the terminal, a type of a message sent by the terminal, or a priority of a message sent by the terminal.

Optionally, the type of the terminal is indicated by a cyclic shift value of a sequence that is used for a demodulation reference signal DMRS in a signal sent by the terminal.

In this embodiment, when the first-type terminal and the second-type terminal share the resource pool, the first-type terminal increases the signal transmit power and/or the second-type terminal decreases the signal transmit power, so that even though different types of terminals transmit different signals by using resources in a same time interval that are close in frequency domain, a difference between transmit power of these signals is not large. In this way, in-band emission interference is reduced and a receive-end device does not lose a signal.

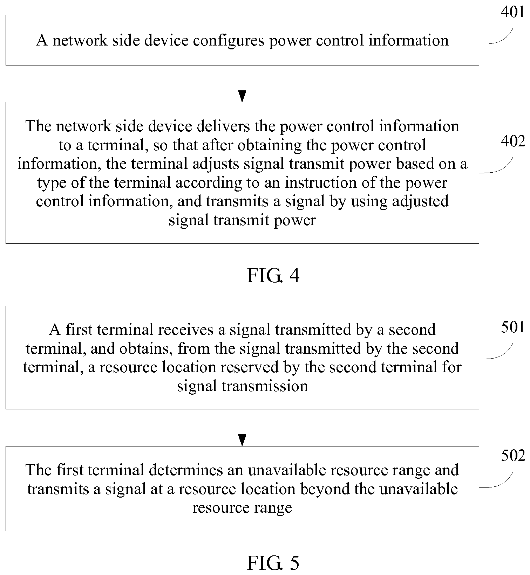

FIG. 4 is a schematic flowchart of a signal transmission control method according to an embodiment of a related invention. This embodiment is described from a perspective of a network side device, and a manner for controlling signal transmit power of a terminal is determined based on a type of the terminal. Specifically, in this embodiment, the method may include, for example, the following steps:

401. The network side device configures power control information.

402. The network side device delivers the power control information to the terminal, so that after obtaining the power control information, the terminal adjusts the signal transmit power based on the type of the terminal according to an instruction of the power control information, and transmits a signal by using adjusted signal transmit power.

The type of the terminal is a first type or a second type.

The power control information is configured as first instruction information and/or second instruction information when a first condition is met, the first instruction information is used to instruct a first-type terminal to increase signal transmit power, the second instruction information is used to instruct a second-type terminal to decrease signal transmit power, and the first condition is that the first-type terminal and the second-type terminal share a resource pool.

Optionally, the power control information is specifically configured as the first instruction information and/or the second instruction information when both the first condition and a second condition are met; and the second condition is that the first-type terminal and the second-type terminal transmit signals in a same time interval through frequency resource multiplexing.

Optionally, the power control information is specifically configured as the first instruction information when both the first condition and a third condition are met; and the third condition is that a density of second-type terminals is greater than a first density threshold or a quantity of second-type terminals is greater than a first quantity threshold.

Optionally, the power control information is specifically configured as the second instruction information when both the first condition and a fourth condition are met; and the fourth condition is that a density of first-type terminals is less than a second density threshold or a quantity of second-type terminals is less than a second quantity threshold.

Optionally, the type of the terminal may be specifically obtained through classification based on any one or more types of information: an actual type of the terminal, a service type of the terminal, a type of a message sent by the terminal, or a priority of a message sent by the terminal.

Optionally, the type of the terminal is indicated by a cyclic shift value of a sequence that is used for a demodulation reference signal DMRS in a signal sent by the terminal.

It should be noted that this embodiment corresponds to the implementation in which the network side device configures the power control information in the embodiment shown in FIG. 3, and this embodiment is described from the perspective of the network side device while the embodiment shown in FIG. 3 is described from the perspective of the terminal. Therefore, for related content in this embodiment, refer to the description of the embodiment shown in FIG. 3.

In this embodiment, when the first-type terminal and the second-type terminal share the resource pool, the first-type terminal increases the signal transmit power and/or the second-type terminal decreases the signal transmit power, so that even though different types of terminals transmit different signals by using resources in a same time interval that are close in frequency domain, a difference between transmit power of these signals is not large. In this way, in-band emission interference is avoided and a receive-end device does not lose a signal.

FIG. 5 is a schematic flowchart of a signal transmission control method according to an embodiment of a related invention. This embodiment is described from a perspective of a terminal, and when selecting a resource location for signal transmission, the terminal may exclude a resource location that is close in frequency domain to and located in a same time interval as a resource location reserved by another terminal of a different type. Specifically, in this embodiment, the method may include, for example, the following steps:

501. A first terminal receives a signal transmitted by a second terminal, and obtains, from the signal transmitted by the second terminal, a resource location reserved by the second terminal for signal transmission.

502. The first terminal determines an unavailable resource range and transmits a signal at a resource location beyond the unavailable resource range.

The unavailable resource range is located in a time interval in which the resource location reserved by the second terminal for signal transmission is located.

A type of the first terminal is a first type, and a type of the second terminal is a second type.

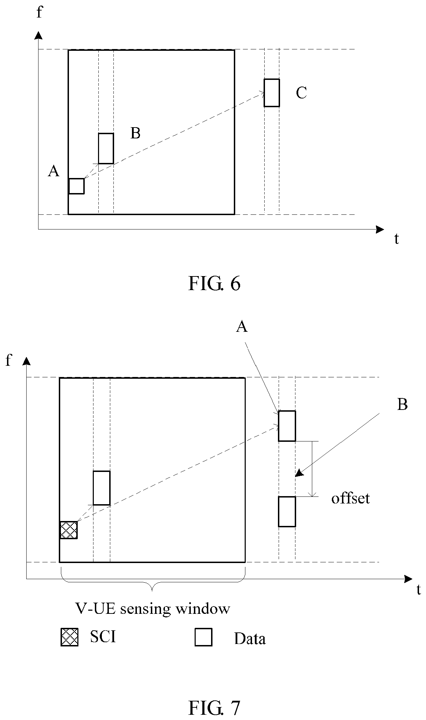

It may be understood that in a signal transmitted by the second terminal in a current time interval, sidelink control information (English: Sidelink Control Information, SCI for short) indicates a resource location reserved by the second terminal for signal transmission in a subsequent time interval. As shown in FIG. 6, A represents the SCI in the signal transmitted by the second terminal in the current time interval, and B and C represent resource locations that are reserved by the second terminal for signal transmission in subsequent time intervals. A indicates B and C.

In a specific implementation, when receiving, in the current time interval, the signal transmitted by the second terminal, the first terminal may identify, based on the SCI of the signal, the resource location reserved by the second terminal for signal transmission in the subsequent time interval. Because in-band emission interference is caused only when a first-type terminal and a second-type terminal perform frequency domain resource multiplexing in a same time interval, when the first terminal belongs to a first-type terminal and the second terminal belongs to a second-type terminal, after identifying the resource location reserved by the second terminal for signal transmission, the first terminal may determine an unavailable resource range from a time interval in which the resource location reserved by the second terminal for signal transmission is located, and avoid transmitting a signal at a resource location within the unavailable resource range. In this way, a signal transmitted by the second terminal at the resource location reserved by the second terminal does not cause in-band emission interference to a signal transmitted by the first terminal.

In this embodiment, for the resource location reserved by the second terminal for signal transmission, the first terminal may determine, as unavailable resource locations to be excluded, all resource locations in the time interval in which the resource location reserved by the second terminal for signal transmission is located, or may determine, as unavailable resource locations to be excluded, some resource locations in the time interval in which the resource location reserved by the second terminal for signal transmission is located that are close in frequency domain to the resource location reserved by the second terminal.

For example, the first terminal may determine, by using a first condition, whether to exclude all the resource locations in the time interval. Specifically, in this embodiment, the method may further include, for example, measuring signal receive power based on the signal transmitted by the second terminal. When the first condition is met, the unavailable resource range includes all the resource locations in the time interval. The first condition is that the signal receive power is greater than a power threshold. It may be understood that the first condition is used to determine whether to exclude all the resource locations in the time interval mainly due to the following reasons: If the first terminal has relatively high receive power for the signal transmitted by the second terminal, the first terminal and the second terminal are relatively close in geographical locations. If the first-type terminal and the second-type terminal are relatively close in geographical locations, relatively strong in-band emission interference may exist between the first-type terminal and the second-type terminal, or the first-type terminal and the second-type terminal possibly cannot detect a signal transmitted by each other. Therefore, when the first terminal has relatively high receive power for the signal transmitted by the second terminal, the first terminal excludes all the resource locations in the time interval. The first terminal and the second terminal may transmit signals in different time intervals, to avoid the foregoing problem.

For another example, the first terminal may determine, by using a second condition, whether to exclude all the resource locations in the time interval. Specifically, in this embodiment, the method may further include, for example, obtaining a geographical location of the second terminal from the signal transmitted by the second terminal and calculating a geographical location distance between the first terminal and the second terminal. When the second condition is met, the unavailable resource range includes all the resource locations in the time interval. The second condition is that the geographical location distance is less than a distance threshold. It may be understood that the second condition is used to determine whether to exclude all the resource locations in the time interval mainly due to the following reasons: If the first-type terminal and the second-type terminal are relatively close in geographical locations, relatively strong in-band emission interference may exist between the first-type terminal and the second-type terminal, or the first-type terminal and the second-type terminal possibly cannot detect a signal transmitted by each other. Therefore, when the first terminal has relatively high receive power for the signal transmitted by the second terminal, the first terminal excludes all the resource locations in the time interval. The first terminal and the second terminal may transmit signals in different time intervals, to avoid the foregoing problem.

For still another example, the first terminal may determine, by using a third condition, whether to exclude all the resource locations in the time interval. Specifically, when the third condition is met, the unavailable resource range may include all the resource locations in the time interval. The third condition is that a quantity of second terminals that reserve a resource location in the time interval for signal transmission is greater than a quantity threshold. It may be understood that the third condition is used to determine whether to exclude all the resource locations in the time interval, mainly to reduce in-band emission interference between a signal transmitted by the first-type terminal and a signal transmitted by the second-type terminal from a perspective of interference randomization.

For still another example, the first terminal may exclude some resource locations in the time interval by using a frequency separation threshold. Specifically, the unavailable resource range may include all resource locations in the time interval that are at a distance of a maximum of the frequency separation threshold in frequency domain away from the resource location reserved by the second terminal for signal transmission. As shown in FIG. 7, A represents the resource location reserved by the second terminal for signal transmission, B represents the unavailable resource range, and offset represents the frequency separation threshold. It may be understood that the unavailable resource range may be specifically located on one side, in frequency domain, of the resource location reserved by the second terminal for signal transmission, or may be located on two sides, in frequency domain, of the resource location reserved by the second terminal for signal transmission.

The frequency separation threshold may be determined based on receive power of the first terminal for the signal sent by the second terminal. Specifically, in this embodiment, the method may further include, for example, measuring signal receive power based on the signal transmitted by the second terminal. The frequency separation threshold is determined based on the signal receive power. Higher signal receive power indicates a larger frequency separation threshold.

Further, to expand a resource selection range of the first-type terminal, a preferred resource region may be set for the second-type terminal in frequency domain, and during resource selection, the second-type terminal may first select a resource in this region to send a message.

In this embodiment, in a channel listening process, the first terminal may obtain the resource location reserved by the second terminal for signal sending, measure the signal receive power based on the signal transmitted by the second terminal, and obtain the geographical location of the second terminal. Specifically, in the channel listening process, the resource location reserved by the second terminal for signal transmission may be obtained by demodulating the SCI sent by the second terminal, and the signal receive power may be measured by detecting a physical sidelink shared channel (English: Physical Sidelink Shared Channel, PSSCH for short).

It may be understood that this embodiment may be applied to a plurality of different scenarios, and the first-type terminal and the second-type terminal may be determined based on a scenario. For example, in a scenario of an Internet of Vehicles technology, the first-type terminal may be P-UE, and the second-type terminal may be V-UE. For another example, in a scenario of the Internet of Vehicles technology, the first-type terminal may be V-UE, and the second-type terminal may be P-UE. A signal coverage area of the P-UE is usually smaller than a signal coverage area of the V-UE, and the V-UE usually does not need to consider power consumption because no power supply problem exists, while the P-UE needs to consider power due to a power supply problem. Therefore, the P-UE may use relatively low signal transmit power, and the V-UE may use relatively high signal transmit power. In many cases, the signal transmit power used by the P-UE is lower than the signal transmit power used by the V-UE.

Optionally, the type of the first terminal may be specifically obtained through classification based on any one or more types of information: an actual type of the first terminal, a service type of the first terminal, a type of a message sent by the first terminal, or a priority of a message sent by the first terminal.

Optionally, the type of the first terminal is indicated by a cyclic shift value of a sequence that is used for a demodulation reference signal DMRS in a signal sent by the terminal.

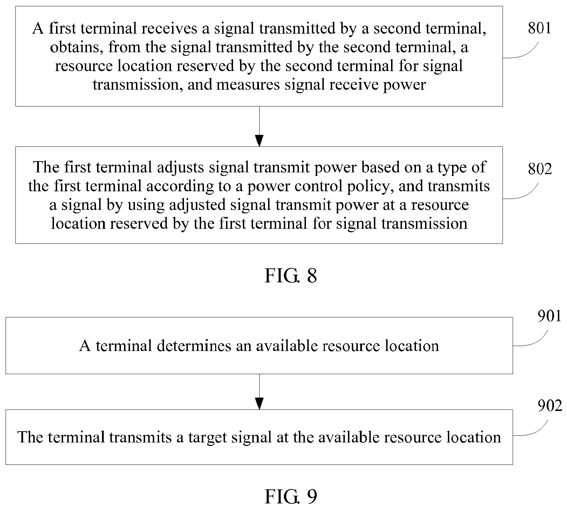

In this embodiment, when selecting a resource location for signal transmission, the terminal may exclude a resource location that is close in frequency domain to and located in a same time interval as a resource location reserved by another terminal of a different type. Therefore, signals transmitted by different types do not exist at resource locations in a same time interval that are close in frequency domain. In this way, in-band emission interference is reduced and a receive-end device does not lose a signal. FIG 8 is a schematic flowchart of a signal transmission control method according to an embodiment of a related invention. This embodiment is described from a perspective of a terminal, and a manner for controlling signal transmit power of the terminal is determined based on a type of the terminal. Specifically, in this embodiment, the method may include, for example, the following steps:

801. A first terminal receives a signal transmitted by a second terminal, obtains, from the signal transmitted by the second terminal, a resource location reserved by the second terminal for signal transmission, and measures signal receive power.
802. The first terminal adjusts signal transmit power based on a type of the first terminal according to a power control policy, and transmits a signal by using adjusted signal transmit power at a resource location reserved by the first terminal for signal transmission.

The type of the first terminal is a first type and a type of the second terminal is a second type, or the type of the first terminal is a second type and a type of the second terminal is a first type.

The power control policy is used to instruct a first-type terminal to increase signal transmit power when both a first condition and a second condition are met, or used to instruct a second-type terminal to decrease signal transmit power when both the first condition and the second condition are met.

The first condition is that the resource location reserved by the second terminal for signal transmission and the resource location reserved by the first terminal for signal transmission are located in a same time interval.

The second condition is that the signal receive power is greater than a power threshold.

In a specific implementation, after obtaining, from the signal transmitted by the second terminal, the resource location reserved by the second terminal for signal transmission and measuring the signal receive power, the first terminal may determine the power control policy based on the signal receive power and the resource location reserved by the second terminal for signal transmission. Then the first terminal may adjust the signal transmit power of the first terminal based on the type of the first terminal according to the power control policy.

The first condition and the second condition may be used to determine the power control policy. Specifically, the power control policy may be determined depending on whether the resource location reserved by the second terminal for signal transmission and the signal received power meet the first condition and the second condition respectively. The first condition is that the resource location reserved by the second terminal for signal transmission and the resource location reserved by the first terminal for signal transmission are located in a same time interval. The second condition is that the signal receive power is greater than a power threshold. The power threshold may be, for example, a preset value.

Further, the power control policy may be, for example, specifically used to instruct the first-type terminal to increase the signal transmit power to the signal transmit power of the second-type terminal when both the first condition and the second condition are met, or specifically used to instruct the second-type terminal to decrease the signal transmit power to the signal transmit power of the first-type terminal when both the first condition and the second condition are met.

For example, in addition to the first condition and the second condition, the power control policy may be further determined by using a third condition. Specifically, the power control policy may be specifically used to instruct the first-type terminal to increase the signal transmit power when the first condition, the second condition, and the third condition are all met, or may be specifically used to instruct the second-type terminal to decrease the signal transmit power when the first condition, the second condition, and the third condition are all met. The third condition is that a distance between the resource location reserved by the second terminal for signal transmission and the resource location reserved by the first terminal for signal transmission is less than a first frequency separation threshold in frequency domain.

For another example, in addition to the first condition and the second condition, the power control policy may be further determined by using a third condition. Specifically, the power control policy may be specifically used to instruct the first-type terminal and/or the second-type terminal to keep the signal transmit power unchanged when a fourth condition is met. The fourth condition is that a distance between the resource location reserved by the second terminal for signal transmission and the resource location reserved by the first terminal for signal transmission is greater than a second frequency separation threshold in frequency domain.

The first frequency separation threshold and the second frequency separation threshold may be preset thresholds. The first frequency separation threshold may be less than the second frequency separation threshold, or the first frequency separation threshold may be equal to the second frequency separation threshold.

It may be understood that this embodiment may be applied to a plurality of different scenarios, and the first-type terminal and the second-type terminal may be determined based on a scenario. For example, in a scenario of an Internet of Vehicles technology, the first-type terminal may be P-UE, and the second-type terminal may be V-UE. A signal coverage area of the P-UE is usually smaller than a signal coverage area of the V-UE, and the V-UE usually does not need to consider power consumption because no power supply problem exists, while the P-UE needs to consider power due to a power supply problem. Therefore, the P-UE may use relatively low signal transmit power, and the V-UE may use relatively high signal transmit power. In many cases, the signal transmit power used by the P-UE is lower than the signal transmit power used by the V-UE.

Optionally, the type of the first terminal may be specifically obtained through classification based on any one or more types of information: an actual type of the first terminal, a service type of the first terminal, a type of a message sent by the first terminal, or a priority of a message sent by the first terminal.

Optionally, the type of the first terminal is indicated by a cyclic shift value of a sequence that is used for a demodulation reference signal DMRS in a signal sent by the terminal.

In this embodiment, when a resource location reserved by the first-type terminal for signal transmission and a resource location reserved by the second-type terminal for signal transmission are located in a same time interval, the first-type terminal increases the signal transmit power and/or the second-type terminal decreases the signal transmit power, so that even though different types of terminals transmit different signals by using resources in a same time interval that are close in frequency domain, a difference between transmit power of these signals is not large. In this way, in-band emission interference is avoided and a receive-end device does not lose a signal.

FIG. 9 is a schematic flowchart of a signal transmission control method according to an embodiment of a related invention. This embodiment is described from a perspective of a terminal, and resource locations used by different types of terminals to transmit signals are separated by a resource location occupied by a guard band. Specifically, in this embodiment, the method may include, for example, the following steps:

> 901. The terminal determines an available resource location.
> 902. The terminal transmits a target signal at the available resource location.

A type of the terminal is a first type or a second type.

If the terminal is a first-type terminal, the available resource location includes a first-type resource location and does not include a second-type resource location. If the terminal is a second-type terminal, the available resource location includes the second-type resource location and does not include the first-type resource location.

The first-type resource location may be used by the first-type terminal to transmit a signal, the second-type resource location may be used by the second-type terminal to transmit a signal, and the first-type resource location and the second-type resource location are separated in frequency domain by a resource location occupied by a guard band.

In a specific implementation, when the terminal needs to determine a resource location used to transmit the target signal, the terminal may determine, as the available resource location based on a guard band forming mechanism, the resource location used to transmit the target signal. Specifically, based on the guard band forming mechanism, time-frequency resource locations in a same time interval are classified into three types of resource locations: the first-type resource location, the second-type resource location, and the resource location occupied by the guard band. In the same time interval, the first-type resource location and the second-type resource location are not contiguous in frequency domain, and the resource location occupied by the guard band exists between the first-type resource location and the second-type resource location. In other words, the first-type resource location and the second-type resource location are separated in frequency domain by the resource location occupied by the guard band. An available resource location determined by the first-type terminal includes one or more first-type resource locations but does not include any second-type resource location. An available resource location determined by the second-type terminal includes one or more second-type resource locations but does not include any first-type resource location. In this way, the resource location occupied by the guard band can separate, from a resource location used by the second-type terminal to transmit a signal, a resource location used by the first-type terminal to transmit a signal.

It may be understood that a plurality of different guard band forming mechanisms may be used to determine the available resource location.

In some implementations of this embodiment, a guard band forming mechanism means that the resource location occupied by the guard band specifically includes all resource locations within a configured frequency domain range. In other words, the resource location occupied by the guard band is determined based on a configuration. Therefore, the first-type resource location and the second-type resource location may be determined based on the resource location occupied by the guard band, and the terminal may determine an available resource based on the first-type resource location, the second-type resource location, and the resource location occupied by the guard band that are determined based on the configuration. Specifically, step 901 may specifically include: determining, by the terminal, the available resource location based on guard band information. The resource location occupied by the guard band includes all the resource locations within the configured frequency domain range, and the guard band information is used to indicate the configured frequency domain range. The guard band information may be configured by a network side device and delivered to the terminal, or the guard band information may be preconfigured on the terminal.

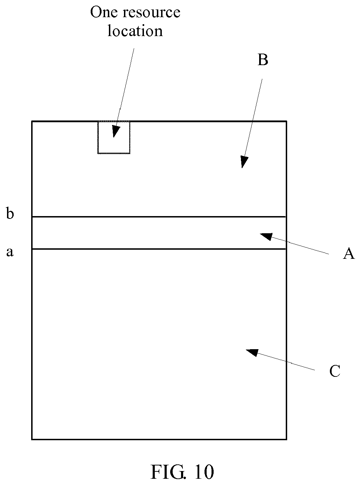

As shown in FIG. 10, in an example of the guard band forming mechanism, the guard band forming mechanism is based on a configured frequency range. A frequency range between a frequency "a" and a frequency "b" is the configured frequency range. Each resource location in a region "A" is a resource location occupied by a guard band. Each resource location in a region "B" is a first-type resource range. Each resource location in a region "C" is a second-type resource location.

When the guard band forming mechanism is based on the configured frequency range, the terminal may not transmit a signal by using the resource location occupied by the guard band, or may transmit a signal by using the resource location occupied by the guard band. In other words, the available resource location may not include the resource location occupied by the guard band, or may include the resource location occupied by the guard band.

When the terminal may not transmit a signal by using the resource location occupied by the guard band, in other words, the available resource location does not include the resource location occupied by the guard band, the resource location used by the first-type terminal to transmit the signal and the resource location used by the second-type terminal to transmit the signal can be better separated in frequency domain, to better avoid in-band emission interference between the signal transmitted by the first-type terminal and the signal transmitted by the second-type terminal.

When the terminal transmits a signal by using the resource location occupied by the guard band, in other words, the available resource location includes the resource location occupied by the guard band, the resource location occupied by the guard band can be used to transmit a signal and not wasted, so that fewer time-frequency resources are wasted. In this case, to avoid in-band emission interference, the terminal may select a suitable signal transmission manner to transmit a signal at the available resource location.

For example, the terminal may transmit the signal at the available resource location by using a modulation and coding scheme (English: Modulation and Coding Scheme, MCS for short) with a relatively small index value. Information corresponding to a signal transmitted at the first-type resource location or the second-type resource location in the available resource location may be totally different from information corresponding to a signal transmitted at the resource location, occupied by the guard band, in the available resource location. Specifically, step 902 may specifically include: decreasing, by the terminal, a modulation and coding scheme MCS index value, and transmitting the target signal at the available resource location by using a modulation and coding scheme corresponding to a decreased MCS index value. The available resource location further includes a resource location that is occupied by the guard band and that is in a time interval in which the available resource location is located.

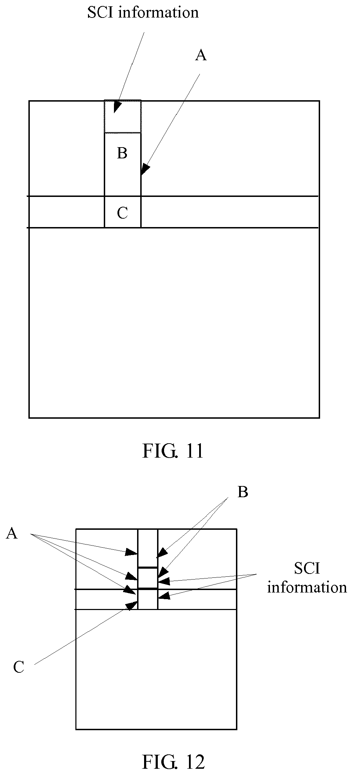

As shown in FIG. 11, in a schematic diagram of an example of transmitting a target signal, an available resource location "A" includes a first-type resource location "B" and a resource location "C" that is occupied by a guard band. Information corresponding to a target signal at "B" may be totally different from information corresponding to a target signal at "C".

It may be understood that when the terminal transmits, by using a modulation and coding scheme corresponding to a relatively small MCS value, a signal at the resource location occupied by the guard band, even though in-band emission interference occurs at the resource location occupied by the guard band, the in-band emission interference is reduced to a large extent, and a receive-end device is less likely to lose a signal.

For another example, the terminal may transmit an original signal at the first-type resource location or the second-type resource location in the available resource location, and transmit a redundant signal at the resource location, occupied by the guard band, in the available resource location. The redundant signal may be a signal re-transmitted for a part or all of the original signal. Specifically, the available resource location may further include a resource location that is occupied by the guard band and that is in a time interval in which the available resource location is located, the target signal includes the original signal and the redundant signal, information corresponding to the redundant signal is all included in information corresponding to the original signal, the original signal is transmitted at the first-type resource location or the second-type resource location in the available resource location, and the redundant signal is transmitted at the resource location, occupied by the guard band, in the available resource location.

Further, because SCI information is relatively important and has a relatively small quantity of bits, when only information of a relatively small quantity of bits can be sent at the resource location occupied by the guard band, the information corresponding to the redundant signal may be specifically sidelink control information SCI in the information corresponding to the original signal.

As shown in FIG. 12, in a schematic diagram of an example of transmitting a target signal, an available resource location "A" includes a first-type resource location "B" and a resource location "C" that is occupied by a guard band. Information sent at "B" may be SCI information sent at "C".

It may be understood that because the terminal sends the redundant signal at the resource location occupied by the guard band, even though the redundant signal suffers in-band emission interference, the original signal sent at the first-type resource location or the second-type resource location retains the information corresponding to the redundant signal, so that the problem of in-band emission interference is avoided, and a receive-end device is less likely to lose a signal.

In other implementations of this embodiment, a guard band forming mechanism means that the resource location occupied by the guard band is specifically determined based on the available resource location determined by the terminal. In this case, even though the resource location occupied by the guard band is not used to send any information, because the guard band occupies only some resource locations that are in a same time interval as the available resource location, the resource location occupied by the guard band does not waste a large quantity of time-frequency resources. Specifically, in this embodiment, the method further includes: determining, by the terminal based on the available resource location, the resource location occupied by the guard band; and reserving, by the terminal, the resource location occupied by the guard band and rejecting signal transmission at the resource location occupied by the guard band. The resource location occupied by the guard band includes all resource locations that are located in a time interval in which the available resource location is located and that are at a distance of a maximum of a frequency domain width of the guard band away from an edge of the available resource location in frequency domain.

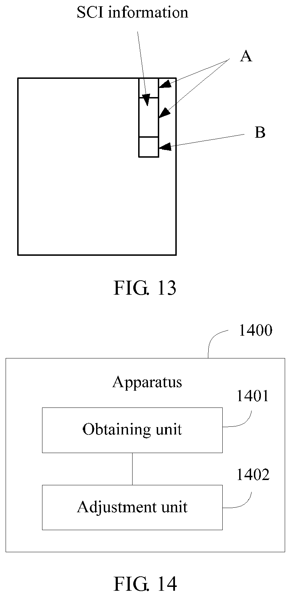

As shown in FIG. 13, in a schematic diagram of an example of transmitting a target signal, an available resource location is "A" including first-type resource locations only, and a resource location occupied by a guard band is "B". No information is sent at "B", and "B" is located only adjacent in frequency domain to and in a same time interval as "A".

Further, the frequency domain width of the guard band may be, for example, determined based on signal transmit power and/or signal receive power at a resource location adjacent to the resource location occupied by the guard band. For example, higher signal transmit and/or receive power indicates a larger frequency domain width of the guard band.

Further, the sidelink control information SCI corresponding to the target signal may be, for example, used to indicate the resource location occupied by the guard band.

Optionally, the type of the terminal may be specifically obtained through classification based on any one or more types of information: an actual type of the terminal, a service type of the terminal, a type of a message sent by the terminal, or a priority of a message sent by the terminal.

Optionally, the type of the terminal is indicated by a cyclic shift value of a sequence that is used for a demodulation reference signal DMRS in a signal sent by the terminal.

In this embodiment, resource locations used by different types of terminals to transmit signals are separated by the resource location occupied by the guard band, and each type of terminal cannot use a resource location that is available for another type of terminal to transmit a signal. Therefore, signals transmitted by different types do not exist at resource locations in a same time interval that are close in frequency domain, or even though different signals with a relatively large power difference that are transmitted by different types of terminals exist at resource locations in a same time interval that are close in frequency domain, content of a signal suffering in-band emission interference is not severely affected. In this way, in-band emission interference is avoided and a receive-end device does not lose a signal.

FIG. 14 is a structural diagram of a signal transmission control apparatus according to an embodiment of the present invention. The apparatus 1400 in this embodiment may be configured and implemented on a terminal, and may specifically include:

> an obtaining unit 1401, configured to obtain power control information; and
> an adjustment unit 1402, configured to adjust signal transmit power based on a type of the terminal according to an instruction of the power control information, and transmit a signal by using adjusted signal transmit power.

The type of the terminal is a first type or a second type.

The power control information is configured as first instruction information and/or second instruction information when a first condition is met, the first instruction information is used to instruct a first-type terminal to increase signal transmit power, the second instruction information is used to instruct a second-type terminal to decrease signal transmit power, and the first condition is that the first-type terminal and the second-type terminal share a resource pool.

Optionally, the power control information is specifically configured as the first instruction information and/or the second instruction information when both the first condition and a second condition are met; and the second condition is that the first-type terminal and the second-type terminal transmit signals in a same time interval through frequency resource multiplexing.

Optionally, the power control information is specifically configured as the first instruction information when both the first condition and a third condition are met; and the third condition is that a density of second-type terminals is greater than a first density threshold or a quantity of second-type terminals is greater than a first quantity threshold.

Optionally, the power control information is specifically configured as the second instruction information when both the first condition and a fourth condition are met; and the fourth condition is that a density of first-type terminals is less than a second density threshold or a quantity of second-type terminals is less than a second quantity threshold.

Optionally, the power control information is configured by a network side device and delivered to the terminal, or the power control information is configured by the terminal based on preset information.

Optionally, the type of the terminal may be specifically obtained through classification based on any one or more types of information: an actual type of the terminal, a service type of the terminal, a type of a message sent by the terminal, or a priority of a message sent by the terminal.

Optionally, the type of the terminal is indicated by a cyclic shift value of a sequence that is used for a demodulation reference signal DMRS in a signal sent by the terminal.

In this embodiment, when the first-type terminal and the second-type terminal share the resource pool, the first-type terminal increases the signal transmit power and/or the second-type terminal decreases the signal transmit power, so that even though different types of terminals transmit different signals by using resources in a same time interval that are close in frequency domain, a difference between transmit power of these signals is not large. In this way, in-band emission interference is avoided and a receive-end device does not lose a signal.

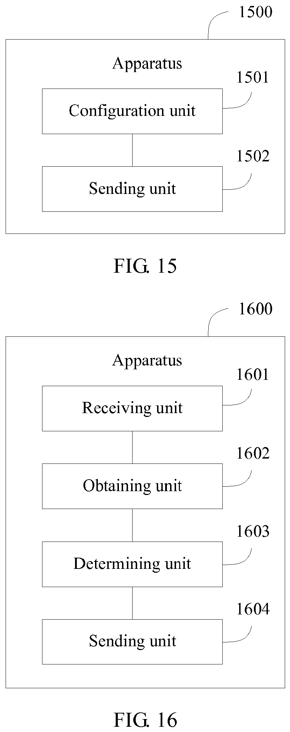

FIG. 15 is a structural diagram of a signal transmission control apparatus according to an embodiment of a related invention. The apparatus 1500 in this embodiment may be configured and implemented on a network side device, and may specifically include:

> a configuration unit 1501, configured to configure power control information; and
> a sending unit 1502, configured to deliver the power control information to a terminal, so that after obtaining the power control information, the terminal adjusts signal transmit power based on a type of the terminal according to an instruction of the power control information, and transmits a signal by using adjusted signal transmit power.

The type of the terminal is a first type or a second type.

The power control information is configured as first instruction information and/or second instruction information when a first condition is met, the first instruction information is used to instruct a first-type terminal to increase signal transmit power, the second instruction information is used to instruct a second-type terminal to decrease signal transmit power, and the first condition is that the first-type terminal and the second-type terminal share a resource pool.

Optionally, the power control information is specifically configured as the first instruction information and/or the second instruction information when both the first condition and a second condition are met; and the second condition is that the first-type terminal and the second-type terminal transmit signals in a same time interval through frequency resource multiplexing.

Optionally, the power control information is specifically configured as the first instruction information when both the first condition and a third condition are met; and the third condition is that a density of second-type terminals is greater than a first density threshold or a quantity of second-type terminals is greater than a first quantity threshold.

Optionally, the power control information is specifically configured as the second instruction information when both the first condition and a fourth condition are met; and the fourth condition is that a density of first-type terminals is less than a second density threshold or a quantity of second-type terminals is less than a second quantity threshold.

Optionally, the type of the terminal may be specifically obtained through classification based on any one or more types of information: an actual type of the terminal, a service type of the terminal, a type of a message sent by the terminal, or a priority of a message sent by the terminal.

Optionally, the type of the terminal is indicated by a cyclic shift value of a sequence that is used for a demodulation reference signal DMRS in a signal sent by the terminal.

In this embodiment, when the first-type terminal and the second-type terminal share the resource pool, the first-type terminal increases the signal transmit power and/or the second-type terminal decreases the signal transmit power, so that even though different types of terminals transmit different signals by using resources in a same time interval that are close in frequency domain, a difference between transmit power of these signals is not large. In this way, in-band emission interference is avoided and a receive-end device does not lose a signal.

FIG. 16 is a structural diagram of a signal transmission control apparatus according to an embodiment of a related invention. The apparatus 1600 in this embodiment may be configured and implemented on a first terminal, and may specifically include:

> a receiving unit 1601, configured to receive a signal transmitted by a second terminal;
> an obtaining unit 1602, configured to obtain, from the signal transmitted by the second terminal, a resource location reserved by the second terminal for signal transmission;
> a determining unit 1603, configured to determine an unavailable resource range; and
> a sending unit 1604, configured to transmit a signal at a resource location beyond the unavailable resource range.

The unavailable resource range is located in a time interval in which the resource location reserved by the second terminal for signal transmission is located.

A type of the first terminal is a first type, and a type of the second terminal is a second type.

Optionally, the apparatus 1600 further includes: a measurement unit, configured to measure signal receive power based on the signal transmitted by the second terminal;

when a first condition is met, the unavailable resource range includes all resource locations in the time interval; and

the first condition is that the signal receive power is greater than a power threshold.

Optionally, the apparatus 1600 further includes: a calculation unit, configured to obtain a geographical location of the second terminal from the signal transmitted by the second terminal and calculate a geographical location distance between the first terminal and the second terminal;

when a second condition is met, the unavailable resource range includes all resource locations in the time interval; and

the second condition is that the geographical location distance is less than a distance threshold.

Optionally, when a third condition is met, the unavailable resource range includes all resource locations in the time interval; and

the third condition is that a quantity of second terminals that reserve a resource location in the time interval for signal transmission is greater than a quantity threshold.

Optionally, the unavailable resource range includes all resource locations in the time interval that are at a distance of a maximum of a frequency separation threshold in frequency domain away from the resource location reserved by the second terminal for signal transmission.

Optionally, the apparatus 1600 further includes: a measurement unit, configured to measure signal receive power based on the signal transmitted by the second terminal; and

the frequency separation threshold is determined based on the signal receive power, and higher signal receive power indicates a larger frequency separation threshold.

Optionally, the type of the first terminal may be specifically obtained through classification based on any one or more types of information: an actual type of the first terminal, a service type of the first terminal, a type of a message sent by the first terminal, or a priority of a message sent by the first terminal.

Optionally, the type of the first terminal is indicated by a cyclic shift value of a sequence that is used for a demodulation reference signal DMRS in a signal sent by the first terminal.

In this embodiment, when selecting a resource location for signal transmission, the terminal may exclude a resource location that is close in frequency domain to and located in a same time interval as a resource location reserved by another terminal of a different type. Therefore, signals transmitted by different types do not exist at resource locations in a same time interval that are close in frequency domain. In this way, in-band emission interference is avoided and a receive-end device does not lose a signal.

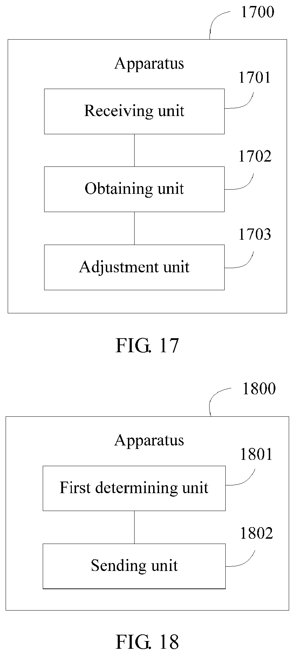

FIG. 17 is a structural diagram of a signal transmission control apparatus according to an embodiment of a related invention. The apparatus 1700 in this embodiment may be configured and implemented on a first terminal, and may specifically include:

> a receiving unit 1701, configured to receive a signal transmitted by a second terminal;
> an obtaining unit 1702, configured to obtain, from the signal transmitted by the second terminal, a resource location reserved by the second terminal for signal transmission and measure signal receive power; and
> an adjustment unit 1703, configured to adjust signal transmit power based on a type of the first terminal according to a power control policy, and transmit a signal by using adjusted signal transmit power at a resource location reserved by the first terminal for signal transmission.

The type of the first terminal is a first type and a type of the second terminal is a second type, or the type of the first terminal is a second type and a type of the second terminal is a first type.

The power control policy is used to instruct a first-type terminal to increase signal transmit power when both a first condition and a second condition are met, or used to instruct a second-type terminal to decrease signal transmit power when both the first condition and the second condition are met.

The first condition is that the resource location reserved by the second terminal for signal transmission and the resource location reserved by the first terminal for signal transmission are located in a same time interval.

The second condition is that the signal receive power is greater than a power threshold.

Optionally, the power control policy is specifically used to instruct the first-type terminal to increase the signal transmit power when the first condition, the second condition, and a third condition are all met, or specifically used to instruct the second-type terminal to decrease the signal transmit power when the first condition, the second condition, and the third condition are all met; and

the third condition is that a distance between the resource location reserved by the second terminal for signal transmission and the resource location reserved by the first terminal for signal transmission is less than a first frequency separation threshold in frequency domain.

Optionally, the power control policy is specifically used to instruct the first-type terminal and/or the second-type terminal to keep the signal transmit power unchanged when a fourth condition is met; and

the fourth condition is that a distance between the resource location reserved by the second terminal for signal transmission and the resource location reserved by the first terminal for signal transmission is greater than a second frequency separation threshold in frequency domain.

Optionally, the power control policy is specifically used to instruct the first-type terminal to increase the signal transmit power to the signal transmit power of the second-type terminal when both the first condition and the second condition are met, or specifically used to instruct the second-type terminal to decrease the signal transmit power to the signal transmit power of the first-type terminal when both the first condition and the second condition are met.

Optionally, the type of the first terminal may be specifically obtained through classification based on any one or more types of information: an actual type of the first terminal, a service type of the first terminal, a type of a message sent by the first terminal, or a priority of a message sent by the first terminal.

Optionally, the type of the first terminal is indicated by a cyclic shift value of a sequence that is used for a demodulation reference signal DMRS in a signal sent by the first terminal.

In this embodiment, when a resource location reserved by the first-type terminal for signal transmission and a resource location reserved by the second-type terminal for signal transmission are located in a same time interval, the first-type terminal increases the signal transmit power and/or the second-type terminal decreases the signal transmit power, so that even though different types of terminals transmit different signals by using resources in a same time interval that are close in frequency domain, a difference between transmit power of these signals is not large. In this way, in-band emission interference is avoided and a receive-end device does not lose a signal.

FIG. 18 is a structural diagram of a signal transmission control apparatus according to an embodiment of a related invention. The apparatus 1800 in this embodiment may be configured and implemented on a terminal, and may specifically include:

> a first determining unit 1801, configured to determine an available resource location; and
> a sending unit 1802, configured to transmit a target signal at the available resource location.

A type of the terminal is a first type or a second type.

If the terminal is a first-type terminal, the available resource location includes a first-type resource location and does not include a second-type resource location. If the terminal is a second-type terminal, the available resource location includes the second-type resource location and does not include the first-type resource location.

The first-type resource location may be used by the first-type terminal to transmit a signal, the second-type resource location may be used by the second-type terminal to transmit a signal, and the first-type resource location and the second-type resource location are separated in frequency domain by a resource location occupied by a guard band.

Optionally, the determining unit 1801 is specifically configured to determine the available resource location based on guard band information. The resource location occupied by the guard band includes all resource locations within a configured frequency domain range, and the guard band information is used to indicate the configured frequency domain range.

Optionally, the guard band information is configured by a network side device and delivered to the terminal, or the guard band information is preconfigured on the terminal.

Optionally, the sending unit 1802 is specifically configured to decrease a modulation and coding scheme MCS index value, and transmit the target signal at the available resource location by using a modulation and coding scheme corresponding to a decreased MCS index value; and the available resource location further includes a resource location that is occupied by the guard band and that is in a time interval in which the available resource location is located.

Optionally, the available resource location further includes a resource location that is occupied by the guard band and that is in a time interval in which the available resource location is located, the target signal includes an original signal and a redundant signal, information corresponding to the redundant signal is all included in information corresponding to the original signal, the original signal is transmitted at the first-type resource location or the second-type resource location in the available resource location, and the redundant signal is transmitted at the resource location, occupied by the guard band, in the available resource location.

Optionally, the information corresponding to the redundant signal is specifically sidelink control information SCI in the information corresponding to the original signal.

Optionally, the apparatus 1800 further includes:

> a second determining unit, configured to determine, based on the available resource location, the resource location occupied by the guard band, where the resource location occupied by the guard band includes all resource locations that are located in a time interval in which the available resource location is located and that are at a distance of a maximum of a frequency domain width of the guard band away from an edge of the available resource location in frequency domain; and
> a reservation unit, configured to reserve the resource location occupied by the guard band and reject signal transmission at the resource location occupied by the guard band.

Optionally, the frequency domain width of the guard band is determined based on signal transmit power and/or signal receive power at a resource location adjacent to the resource location occupied by the guard band, and higher signal transmit and/or receive power indicates a larger frequency domain width of the guard band.

Optionally, the sidelink control information SCI corresponding to the target signal is used to indicate the resource location occupied by the guard band.

Optionally, the type of the terminal may be specifically obtained through classification based on any one or more types of information: an actual type of the terminal, a service type of the terminal, a type of a message sent by the terminal, or a priority of a message sent by the terminal.

Optionally, the type of the terminal is indicated by a cyclic shift value of a sequence that is used for a demodulation reference signal DMRS in a signal sent by the terminal.

In this embodiment, resource locations used by different types of terminals to transmit signals are separated by the resource location occupied by the guard band, and each type of terminal cannot use a resource location that is available for another type of terminal to transmit a signal. Therefore, signals transmitted by different types do not exist at resource locations in a same time interval that are close in frequency domain, or even though different signals with a relatively large power difference that are transmitted by different types of terminals exist at resource locations in a same time interval that are close in frequency domain, content of a signal suffering in-band emission interference is not severely affected. In this way, in-band emission interference is avoided and a receive-end device does not lose a signal.

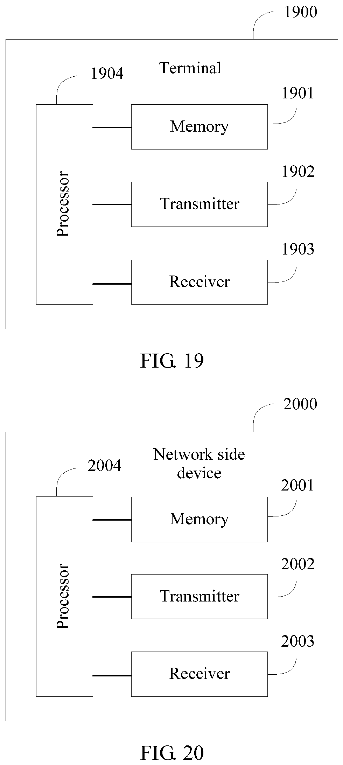

FIG. 19 is a schematic diagram of a hardware structure of a terminal according to an embodiment of a related invention. The terminal 1900 includes a memory 1901, a transmitter 1902, and a receiver 1903, and a processor 1904 that is separately connected to the memory 1901, the transmitter 1902, and the receiver 1903. The memory 1901 is configured to store a program instruction. The processor 1904 is configured to invoke the program instruction stored in the memory 1901 to perform the following operations:

> obtaining power control information; and
> adjusting signal transmit power based on a type of the terminal according to an instruction of the power control information, and transmitting a signal by using adjusted signal transmit power.

The type of the terminal is a first type or a second type.

The power control information is configured as first instruction information and/or second instruction information when a first condition is met, the first instruction information is used to instruct a first-type terminal to increase signal transmit power, the second instruction information is used to instruct a second-type terminal to decrease signal transmit power, and the first condition is that the first-type terminal and the second-type terminal share a resource pool.

Optionally, the processor 1903 may be a central processing unit (Central Processing Unit, CPU). The memory 1901 may be an internal memory of a random access memory (Random Access Memory, RAM) type. The transmitter 1902 and the receiver 1903 each may include a common physical interface, and the physical interface may be an Ethernet (Ethernet) interface or an asynchronous transfer mode (Asynchronous Transfer Mode, ATM) interface. The processor 1904, the receiver 1903, the transmitter 1902, and the memory 1901 may be integrated into one or more independent circuits or hardware, for example, an application-specific integrated circuit (Application-Specific Integrated Circuit, ASIC).

FIG 20 is a schematic diagram of a hardware structure of a network side device according to an embodiment of a related invention. The network side device 2000 includes a memory 2001, a transmitter 2002, and a receiver 2003, and a processor 2004 that is separately connected to the memory 2001, the transmitter 2002, and the receiver 2003. The memory 2001 is configured to store a program instruction. The processor 2004 is configured to invoke the program instruction stored in the memory 2001 to perform the following operations:

configuring power control information and triggering the transmitter 2002 to deliver the power control information to a terminal, so that after obtaining the power control information, the terminal adjusts signal transmit power based on a type of the terminal according to an instruction of the power control information, and transmits a signal by using adjusted signal transmit power.

The type of the terminal is a first type or a second type.

The power control information is configured as first instruction information and/or second instruction information when a first condition is met, the first instruction information is used to instruct a first-type terminal to increase signal transmit power, the second instruction information is used to instruct a second-type terminal to decrease signal transmit power, and the first condition is that the first-type terminal and the second-type terminal share a resource pool.

Optionally, the processor 2003 may be a central processing unit (Central Processing Unit, CPU). The memory 2001 may be an internal memory of a random access memory (Random Access Memory, RAM) type. The transmitter 2002 and the receiver 2003 each may include a common physical interface, and the physical interface may be an Ethernet (Ethernet) interface or an asynchronous transfer mode (Asynchronous Transfer Mode, ATM) interface. The processor 2004, the receiver 2003, the transmitter 2002, and the memory 2001 may be integrated into one or more independent circuits or hardware, for example, an application-specific integrated circuit (Application-Specific Integrated Circuit, ASIC).

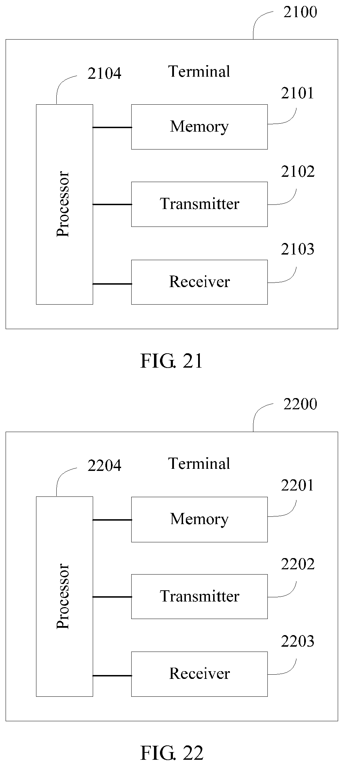

FIG. 21 is a schematic diagram of a hardware structure of a terminal according to an embodiment of a related invention. The terminal 2100 includes a memory 2101, a transmitter 2102, and a receiver 2103, and a processor 2104 that is separately connected to the memory 2101, the transmitter 2102, and the receiver 2103. The memory 2101 is configured to store a program instruction. The processor 2104 is configured to invoke the program instruction stored in the memory 2101 to perform the following operations:

triggering the receiver 2103 to receive a signal transmitted by a second terminal, and obtaining, from the signal transmitted by the second terminal, a resource location reserved by the second terminal for signal transmission; and
determining an unavailable resource range and triggering the transmitter 2102 to transmit a signal at a resource location beyond the unavailable resource range.

The unavailable resource range is located in a time interval in which the resource location reserved by the second terminal for signal transmission is located.

A type of the first terminal is a first type, and a type of the second terminal is a second type.

The first terminal is the terminal 2100.

Optionally, the processor 2103 may be a central processing unit (Central Processing Unit, CPU). The memory 2101 may be an internal memory of a random access memory (Random Access Memory, RAM) type. The transmitter 2102 and the receiver 2103 each may include a common physical interface, and the physical interface may be an Ethernet (Ethernet) interface or an asynchronous transfer mode (Asynchronous Transfer Mode, ATM) interface. The processor 2104, the receiver 2103, the transmitter 2102, and the memory 2101 may be integrated into one or more independent circuits or hardware, for example, an application-specific integrated circuit (Application-Specific Integrated Circuit, ASIC).

FIG. 22 is a schematic diagram of a hardware structure of a terminal according to an embodiment of a related invention. The terminal 2200 includes a memory 2201, a transmitter 2202, and a receiver 2203, and a processor 2204 that is separately connected to the memory 2201, the transmitter 2202, and the receiver 2203. The memory 2201 is configured to store a program instruction. The processor 2204 is configured to invoke the program instruction stored in the memory 2201 to perform the following operations:

> triggering the receiver 2203 to receive a signal transmitted by a second terminal, obtaining, from the signal transmitted by the second terminal, a resource location reserved by the second terminal for signal transmission, and measuring signal receive power; and
> adjusting signal transmit power based on a type of the first terminal according to a power control policy, and transmitting a signal by using adjusted signal transmit power at a resource location reserved by the first terminal for signal transmission.

The type of the first terminal is a first type and a type of the second terminal is a second type, or the type of the first terminal is a second type and a type of the second terminal is a first type.

The power control policy is used to instruct a first-type terminal to increase signal transmit power when both a first condition and a second condition are met, or used to instruct a second-type terminal to decrease signal transmit power when both the first condition and the second condition are met.

The first condition is that the resource location reserved by the second terminal for signal transmission and the resource location reserved by the first terminal for signal transmission are located in a same time interval.

The second condition is that the signal receive power is greater than a power threshold.

The first terminal is the terminal 2200.

Optionally, the processor 2203 may be a central processing unit (Central Processing Unit, CPU). The memory 2201 may be an internal memory of a random access memory (Random Access Memory, RAM) type.

The transmitter 2202 and the receiver 2203 each may include a common physical interface, and the physical interface may be an Ethernet (Ethernet) interface or an asynchronous transfer mode (Asynchronous Transfer Mode, ATM) interface. The processor 2204, the receiver 2203, the transmitter 2202, and the memory 2201 may be integrated into one or more independent circuits or hardware, for example, an application-specific integrated circuit (Application-Specific Integrated Circuit, ASIC).

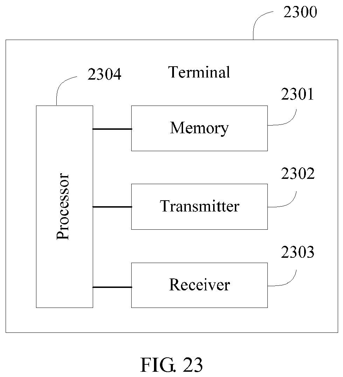

FIG. 23 is a schematic diagram of a hardware structure of a terminal according to an embodiment of a related invention. The terminal 2300 includes a memory 2301, a transmitter 2302, and a receiver 2303, and a processor 2304 that is separately connected to the memory 2301, the transmitter 2302, and the receiver 2303. The memory 2301 is configured to store a program instruction. The processor 2304 is configured to invoke the program instruction stored in the memory 2301 to perform the following operations:

> determining an available resource location; and
> triggering the transmitter 2302 to transmit a target signal at the available resource location.

A type of the terminal is a first type or a second type.

If the terminal is a first-type terminal, the available resource location includes a first-type resource location and does not include a second-type resource location. If the terminal is a second-type terminal, the available resource location includes the second-type resource location and does not include the first-type resource location.

The first-type resource location may be used by the first-type terminal to transmit a signal, the second-type resource location may be used by the second-type terminal to transmit a signal, and the first-type resource location and the second-type resource location are separated in frequency domain by a resource location occupied by a guard band.

Optionally, the processor 2303 may be a central processing unit (Central Processing Unit, CPU). The memory 2301 may be an internal memory of a random access memory (Random Access Memory, RAM) type. The transmitter 2302 and the receiver 2303 each may include a common physical interface, and the physical interface may be an Ethernet (Ethernet) interface or an asynchronous transfer mode (Asynchronous Transfer Mode, ATM) interface. The processor 2304, the receiver 2303, the transmitter 2302, and the memory 2301 may be integrated into one or more independent circuits or hardware, for example, an application-specific integrated circuit (Application-Specific Integrated Circuit, ASIC).

The "first" in names such as "first ..." mentioned in the embodiments of a related invention is used only for name identification, and does not represent the first in order. Such a rule is also applicable to "second" and the like.

From the foregoing descriptions of the implementations, a person skilled in the art may clearly understand that some or all steps of the methods in the embodiments may be implemented by software and a universal hardware platform. Based on such an understanding, the technical solutions of the present invention may be implemented in a form of a software product. The computer software product may be stored in a storage medium, such as a read-only memory (English: read-only memory, ROM)/RAM, a magnetic disk, or an optical disc, and includes instructions for instructing a computer device (which may be a personal computer, a server, or a network communications device such as a router) to perform the methods described in the embodiments or some parts of the embodiments of the present invention.

The embodiments in this specification are all described in a progressive manner. For same or similar parts in the embodiments, refer to these embodiments. Each embodiment focuses on a difference from other embodiments. Especially, method and device embodiments are basically similar to a system embodiment, and therefore are described briefly. For related parts, refer to partial descriptions in the system embodiment. The described device and system embodiments are merely examples. The modules described as separate parts may or may not be physically separate, and parts displayed as modules may or may not be physical modules, may be located at one position, or may be distributed on a plurality of network units. Some or all the modules may be selected based on actual needs to achieve the objectives of the solutions of the embodiments. A person of ordinary skill in the art may understand and implement the embodiments of the present invention without creative efforts.

The foregoing descriptions are merely example implementations of the present invention, and not intended to limit the protection scope of the present invention, which is defined by the appended claims.

**Claims**

1. A signal transmission control method, comprising:

   obtaining (301), by a terminal, power control information; and
   adjusting (302), by the terminal, signal transmit power based on a type of the terminal according to an instruction of the power control information, and transmitting a signal by using adjusted signal transmit power, wherein
   the type of the terminal is a first type or a second type; and
   the power control information is configured as first instruction information and/or second instruction information when a first condition is met, the first instruction information is used to instruct a first-type terminal to increase signal transmit power, the second instruction information is used to instruct a second-type terminal to decrease signal transmit power, and the first condition is that the first-type terminal and the second-type terminal share a resource pool, **characterized in that** the power control information is specifically configured as the first instruction information and/or the second instruction information when both the first condition and a second condition are met; and
   the second condition is that the first-type terminal and the second-type terminal transmit signals in a same time interval through frequency resource multiplexing;
   wherein the power control information is specifically configured as the first instruction information when both the first condition and a third condition are met; and
   the third condition is that a quantity of second-type terminals is greater than a first quantity threshold;
   wherein the power control information is specifically configured as the second instruction information when both the first condition and a fourth condition are met; and
   the fourth condition is that a quantity of second-type terminals is less than a second quantity threshold.

2. The method according to claim 1, wherein the power control information is configured by a network side device and delivered to the terminal, or the power control information is configured by the terminal based on preset information;
   wherein the type of the terminal is obtained through classification based on any one or more types of information: an actual type of the terminal, a service type of the terminal, a type of a message sent by the terminal, or a priority of a message sent by the terminal.

3. A terminal (1400), comprising:

   an obtaining unit (1401) configured to obtain power control information; and
   an adjustment unit (1402) configured to: adjust signal transmit power based on a type of the terminal according to an instruction of the power control information, and transmit a signal by using adjusted signal transmit power, wherein
   the type of the terminal is a first type or a second type; and
   the power control information is configured as first instruction information and/or second instruction information when a first condition is met, the first instruction information is used to instruct a first-type terminal to increase signal transmit power, the second instruction information is used to instruct a second-type terminal to decrease signal transmit power,
wherein the first condition is that the first-type terminal and the second-type terminal share a resource pool, **characterized in that** the power control information is specifically configured as the first instruction information and/or the second instruction information when both the first condition and a second condition are met; and the second condition is that the first-type terminal and the second-type terminal transmit signals in a same time interval through frequency resource multiplexing;
wherein the power control information is specifically configured as the first instruction information when both the first condition and a third condition are met; and the third condition is that a quantity of second-type terminals is greater than a first quantity threshold;
wherein the power control information is specifically configured as the second instruction information when both the first condition and a fourth condition are met; and the fourth condition is that a quantity of second-type terminals is less than a second quantity threshold.

4. The terminal according to claim 3, wherein the terminal is configured to: receive the power control information from a network side device or to configure by the power control information based on preset information;
wherein the terminal is configured to obtain the type of terminal through classification based on any one or more types of information: an actual type of the terminal, a service type of the terminal, a type of a message sent by the terminal, or a priority of a message sent by the terminal.

**Patentansprüche**

1. Verfahren zur Steuerung einer Signalübertragung, umfassend:

   Erhalten (301), durch ein Endgerät, von Leistungssteuerungsinformationen; und
   Einstellen (302) der Signalübertragungsleistung durch das Endgerät basierend auf einem Typ des Endgeräts gemäß einem Befehl der Leistungssteuerungsinformationen, und Übertragen eines Signals unter Verwendung der eingestellten Signalübertragungsleistung, wobei der Typ des Endgerätes ein erster Typ oder ein zweiter Typ ist; und
   die Leistungssteuerungsinformationen als erste Befehlsinformationen und/oder zweite Befehlsinformationen konfiguriert sind, wenn eine erste Bedingung erfüllt ist, die ersten Befehlsinformationen verwendet werden, um ein Endgerät des ersten Typs anzuweisen, die Signalübertragungsleistung zu erhöhen, die zweiten Befehlsinformationen verwendet werden, um ein Endgerät des zweiten Typs anzuweisen, die Signalübertragungsleistung zu verringern, und die erste Bedingung ist, dass sich das Endgerät des ersten Typs und das Endgerät des zweiten Typs einen Ressourcenpool teilen,
**dadurch gekennzeichnet, dass** die Leistungssteuerungsinformationen insbesondere als die ersten Befehlsinformationen und/oder die zweiten Befehlsinformationen konfiguriert sind, wenn sowohl die erste Bedingung als auch eine zweite Bedingung erfüllt sind; und
die zweite Bedingung ist, dass das Endgerät des ersten Typs und das Endgerät des zweiten Typs Signale in einem gleichen Zeitintervall durch Frequenzressourcen-Multiplexing übertragen;
wobei die Leistungs steuerungsinformationen insbesondere als die ersten Befehlsinformationen konfiguriert sind, wenn sowohl die erste Bedingung als auch eine dritte Bedingung erfüllt sind; und
die dritte Bedingung ist, dass eine Anzahl von Endgeräten des zweiten Typs größer ist als ein erster Mengenschwellenwert;
wobei die Leistungs steuerungsinformationen insbesondere als die zweiten Befehlsinformationen konfiguriert sind, wenn sowohl die erste Bedingung als auch eine vierte Bedingung erfüllt sind; und
die vierte Bedingung ist, dass eine Anzahl von Endgeräten des zweiten Typs geringer ist als ein zweiter Mengenschwellenwert.

2. Verfahren nach Anspruch 1, wobei die Leistungssteuerungsinformationen durch eine netzwerkseitige Vorrichtung konfiguriert und an das Endgerät geliefert werden, oder die Leistungssteuerungsinformationen durch das Endgerät basierend auf voreingestellten Informationen konfiguriert werden;
wobei der Typ des Endgeräts durch eine Klassifizierung basierend auf einem oder mehreren Typen von Informationen erhalten wird: einem tatsächlichen Typ des Endgeräts, einem Diensttyp des Endgeräts, einem Typ einer durch das Endgerät gesendeten Nachricht oder einer Priorität einer durch das Endgerät gesendeten Nachricht.

3. Endgerät (1400), umfassend:

   eine Erhaltungseinheit (1401), die dazu konfiguriert ist, Leistungssteuerungsinformationen zu erhalten; und
   eine Einstelleinheit (1402), die dazu konfiguriert ist, die Signalübertragungsleistung basierend auf einem Typ des Endgeräts gemäß einem Befehl der Leistungssteuerungsinformationen einzustellen, und ein Signal unter Verwendung der eingestellten Signalübertragungsleistung zu übertragen, wobei der Typ des Endgerätes ein erster Typ oder ein zweiter Typ ist; und

die Leistungssteuerungsinformationen als erste Befehlsinformationen und/oder zweite Befehlsinformationen konfiguriert sind, wenn eine erste Bedingung erfüllt ist, die ersten Befehlsinformationen verwendet werden, um ein Endgerät des ersten Typs anzuweisen, die Signalübertragungsleistung zu erhöhen, die zweiten Befehlsinformationen verwendet werden, um ein Endgerät des zweiten Typs anzuweisen, die Signalübertragungsleistung zu verringern,

wobei die erste Bedingung ist, dass sich das Endgerät des ersten Typs und das Endgerät des zweiten Typs einen Ressourcenpool teilen, **dadurch gekennzeichnet, dass** die Leistungssteuerungsinformationen insbesondere als die ersten Befehlsinformationen und/oder die zweiten Befehlsinformationen konfiguriert sind, wenn sowohl die erste Bedingung als auch eine zweite Bedingung erfüllt sind; und

die zweite Bedingung ist, dass das Endgerät des ersten Typs und das Endgerät des zweiten Typs Signale in einem gleichen Zeitintervall durch Frequenzressourcen-Multiplexing übertragen; wobei die Leistungs steuerungsinformationen insbesondere als die ersten Befehlsinformationen konfiguriert sind, wenn sowohl die erste Bedingung als auch eine dritte Bedingung erfüllt sind; und

die dritte Bedingung ist, dass eine Anzahl von Endgeräten des zweiten Typs größer ist als ein erster Mengenschwellenwert; wobei die Leistungs steuerungsinformationen insbesondere als die zweiten Befehlsinformationen konfiguriert sind, wenn sowohl die erste Bedingung als auch eine vierte Bedingung erfüllt sind; und

die vierte Bedingung ist, dass eine Anzahl von Endgeräten des zweiten Typs geringer ist als ein zweiter Mengenschwellenwert.

4.  Endgerät nach Anspruch 3,
    wobei das Endgerät dazu konfiguriert ist: die Leistungssteuerungsinformationen von einer netzwerkseitigen Vorrichtung zu empfangen oder die Leistungssteuerungsinformationen basierend auf voreingestellten Informationen zu konfigurieren; wobei das Endgerät dazu konfiguriert ist, den Typ des Endgeräts durch Klassifizierung basierend auf einem oder mehreren Typen von Informationen zu erhalten: einem tatsächlichen Typ des Endgeräts, einem Diensttyp des Endgeräts, einem Typ einer durch das Endgerät gesendeten Nachricht oder einer Priorität einer durch das Endgerät gesendeten Nachricht.

## Revendications

1.  Procédé de commande de transmission de signal, comprenant :

    obtenir (301), par un terminal, des informations de commande de puissance ; et
    ajuster (302), par le terminal, une puissance d'émission de signal sur la base d'un type du terminal selon une instruction des informations de commande de puissance, et transmettre un signal en utilisant une puissance d'émission de signal ajustée, dans lequel
    le type du terminal est un premier type ou un second type ; et
    les informations de commande de puissance sont configurées en tant que premières informations d'instruction et/ou secondes informations d'instruction lorsqu'une première condition est remplie, les premières informations d'instruction sont utilisées pour ordonner à un terminal du premier type d'augmenter la puissance d'émission de signal, les secondes informations d'instruction sont utilisées pour ordonner à un terminal du second type de diminuer la puissance d'émission de signal, et la première condition est que le terminal du premier type et le terminal du second type partagent un pool de ressources,
    **caractérisé en ce que** les informations de commande de puissance sont spécifiquement configurées en tant que premières informations d'instruction et/ou secondes informations instructions lorsqu'à la fois la première condition et une deuxième condition sont remplies ; et
    la deuxième condition est que le terminal du premier type et le terminal du second type émettent des signaux dans un même intervalle de temps par multiplexage de ressources de fréquence ;
    dans lequel les informations de commande de puissance sont spécifiquement configurées en tant que premières informations d'instruction lorsqu'à la fois la première condition et une troisième condition sont remplies ; et
    la troisième condition est qu'une quantité de terminaux du second type soit supérieure à un premier seuil de quantité ;
    dans lequel les informations de commande de puissance sont spécifiquement configurées en tant que secondes informations d'instruction lorsqu'à la fois la première condition et une quatrième condition sont remplies ; et
    la quatrième condition est qu'une quantité de terminaux du second type soit inférieure à un second seuil de quantité.

2. Procédé selon la revendication 1, dans lequel les informations de commande de puissance sont configurées par un dispositif côté réseau et délivrées au terminal, ou les informations de commande de puissance sont configurées par le terminal sur la base d'informations prédéfinies ;

dans lequel le type du terminal est obtenu grâce à une classification basée sur un quelconque ou plusieurs types d'informations : un type réel du terminal, un type de service du terminal, un type d'un message envoyé par le terminal, ou une priorité d'un message envoyé par le terminal.

3. Terminal (1400), comprenant :

une unité d'obtention (1401), configurée pour obtenir des informations de commande de puissance ; et

une unité d'ajustement (1402) configurée pour : ajuster une puissance d'émission de signal sur la base d'un type du terminal selon une instruction des informations de commande de puissance, et transmettre un signal en utilisant une puissance d'émission de signal ajustée, dans lequel le type du terminal est un premier type ou un second type ; et

les informations de commande de puissance sont configurées en tant que premières informations d'instruction et/ou secondes informations d'instruction lorsqu'une première condition est remplie, les premières informations d'instruction sont utilisées pour ordonner à un terminal du premier type d'augmenter la puissance d'émission de signal, les secondes informations d'instruction sont utilisées pour ordonner à un terminal du second type de diminuer la puissance d'émission de signal,

dans lequel la première condition est que le terminal du premier type et le terminal du second type partagent un pool de ressources,

**caractérisé en ce que** les informations de commande de puissance sont spécifiquement configurées en tant que premières informations d'instruction et/ou secondes informations instructions lorsqu'à la fois la première condition et une deuxième condition sont remplies ; et

la deuxième condition est que le terminal du premier type et le terminal du second type émettent des signaux dans un même intervalle de temps par multiplexage de ressources de fréquence ;

dans lequel les informations de commande de puissance sont spécifiquement configurées en tant que premières informations d'instruction lorsqu'à la fois la première condition et une troisième condition sont remplies ; et

la troisième condition est qu'une quantité de terminaux du second type soit supérieure à un premier seuil de quantité ;

dans lequel les informations de commande de puissance sont spécifiquement configurées en tant que secondes informations d'instruction lorsqu'à la fois la première condition et une quatrième condition sont remplies ; et

la quatrième condition est qu'une quantité de terminaux du second type soit inférieure à un second seuil de quantité.

4. Terminal selon la revendication 3, le terminal étant configuré pour :

recevoir les informations de commande de puissance à partir d'un dispositif côté réseau ou pour configurer les informations de commande de puissance sur la base d'informations prédéfinies ;

le terminal étant configuré pour obtenir le type de terminal grâce à une classification basée sur un quelconque ou plusieurs types d'informations : un type réel du terminal, un type de service du terminal, un type d'un message envoyé par le terminal ou une priorité d'un message envoyé par le terminal.

FIG. 1

203

Receive-end
device

201

Terminal

202

Terminal

FIG. 2

301

A terminal obtains power control information

302

The terminal adjusts signal transmit power based on a type
of the terminal according to an instruction of the power
control information, and transmits a signal by using
adjusted signal transmit power

FIG. 3

401

A network side device configures power control information

The network side device delivers the power control information to a terminal, so that after obtaining the power control information, the terminal adjusts signal transmit power based on a type of the terminal according to an instruction of the power control information, and transmits a signal by using adjusted signal transmit power

402

FIG. 4

A first terminal receives a signal transmitted by a second terminal, and obtains, from the signal transmitted by the second terminal, a resource location reserved by the second terminal for signal transmission

501

The first terminal determines an unavailable resource range and transmits a signal at a resource location beyond the unavailable resource range

502

FIG. 5

FIG. 6

V-UE sensing window

⊠ SCI          □ Data

FIG. 7

A first terminal receives a signal transmitted by a second terminal, obtains, from the signal transmitted by the second terminal, a resource location reserved by the second terminal for signal transmission, and measures signal receive power | 801

The first terminal adjusts signal transmit power based on a type of the first terminal according to a power control policy, and transmits a signal by using adjusted signal transmit power at a resource location reserved by the first terminal for signal transmission | 802

FIG. 8

A terminal determines an available resource location | 901

The terminal transmits a target signal at the available resource location | 902

FIG. 9

One resource
location

B

b

a

A

C

FIG. 10

SCI information

A

B

C

FIG. 11

B

A

SCI information

C

FIG. 12

SCI information

A

B

FIG. 13

1400

Apparatus

1401

Obtaining unit

1402

Adjustment unit

FIG. 14

1500

Apparatus

1501

Configuration unit

1502

Sending unit

FIG. 15

1600

Apparatus

1601

Receiving unit

1602

Obtaining unit

1603

Determining unit

1604

Sending unit

FIG. 16

1700

Apparatus

1701

Receiving unit

1702

Obtaining unit

1703

Adjustment unit

FIG. 17

1800

Apparatus

1801

First determining unit

1802

Sending unit

FIG. 18

1900

Terminal

1904

Processor

1901
Memory

1902
Transmitter

1903
Receiver

FIG. 19

2000

Network side
device

2004

Processor

2001
Memory

2002
Transmitter

2003
Receiver

FIG. 20

2100

Terminal

2104

Processor

Memory 2101

Transmitter 2102

Receiver 2103

FIG. 21

2200

Terminal

2204

Processor

Memory 2201

Transmitter 2202

Receiver 2203

FIG. 22

2300

Terminal

2304

Processor

Memory — 2301

Transmitter — 2302

Receiver — 2303

FIG. 23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5828660 A